# EUROPÄISCHE PATENTSCHRIFT

(11) **EP 2 792 232 B1**
(45) Veröffentlichungstag und Bekanntmachung des Hinweises auf die Patenterteilung: **24.05.2017**
(21) Anmeldenummer: 14001326.9
(22) Anmeldetag: 11.04.2014
(51) Int. Cl.: A01G 3/00, B02C 18/22, B02C 21/02

(54) **Aufnahmeeinrichtung für Häcksler für Schnittgut**
Gathering device for shredder for cutting material
Dispositif de ramassage pour broyeur pour materiél à couper

(30) Priorität: 19.04.2013 DE 102013006719
(43) Veröffentlichungstag der Anmeldung: 22.10.2014
(73) Patentinhaber: Sacht, Hans Otto, 69493 Hirschberg (DE)
(72) Erfinder: Sacht, Hans Otto, 69493 Hirschberg (DE)
(74) Vertreter: Sacht-Gorny, Gudrun

(56) Entgegenhaltungen:
- DE-A1- 3 221 729
- DE-U1-202006 006 202
- DE-U1-202009 001 577
- ES-A1- 2 359 901
- US-A- 3 661 333
- US-A- 3 715 873
- US-A- 5 088 532
- US-B1- 6 729 567

## Beschreibung

Die vorliegende Erfindung betrifft eine Aufnahmeeinrichtung für einen Häcksler mit einer Häckseleinrichtung für Schnittgut nach dem Oberbegriff des unabhängigen Anspruchs. Beim Anbau von Wein und Obst fällt zumindest einmal im Jahr Schnittgut an. Beispielsweise wird beim Weinanbau vor Beginn der Vegetationsperiode der Rebschnitt durchgeführt, der vor allem der Regulierung des Menge-Güte-Verhältnisses sowie der Erhaltung und Verjüngung des Weinstocks dient. Dieses Schnittgut wird üblicherweise zerkleinert, bevor es entsorgt oder anderweitig genutzt wird. Beispielsweise kann das zerkleinerte Schnittgut zur Nährstoffversorgung des Bodens im Weingarten belassen werden. Andererseits kann das Schnittgut auch zur Energiegewinnung oder zur Entsorgung verbrannt werden. Für die Energiegewinnung ist es vorteilhaft, wenn das Schnittgut möglichst exakt geschnitten und von gleichmäßiger Länge ist, damit es gut austrocknen kann und problemlos den Fördereinrichtungen einer Verbrennungsanlage zugeführt werden kann. Hierfür sind Schlegelhäcksler, wie sie derzeit oftmals in Rebanlagen eingesetzt werden, nicht geeignet. Eine optimale Zerkleinerung des Schnittgutes kann jedoch mit sogenannten Exakthäckslern erreicht werden.

Die Zerkleinerung des Schnittgutes kann direkt vor Ort erfolgen. Hierfür sind verschiedene Häcksler bekannt, die abgeschnittenes, auf dem Boden liegendes Rebholz oder anderes Schnittgut, beispielsweise aus Obstbaumanlagen, entsprechend zerschlagen und zerkleinern. So beschreibt das deutsche Gebrauchsmuster DE 81 05 345 U1 einen Rebholzhäcksler, bei dem mittels einer Einzugswelle vom Boden abgehobenes Rebgut einer in einer Arbeitstrommel umlaufenden Schlagwelle zugeführt wird. Das genannte Gebrauchsmuster schlägt vor, die Rückwand der Arbeitstrommel mittels einer Scharnierführung ausweichbar federnd zu halten, sodass sich die rückwärtige Wand scharnierartig öffnen kann, wenn Steine oder andere harte Verunreinigungen mit eingezogen werden, um Verstopfungen oder sogar Schädigungen in der Häckseleinrichtung zu vermeiden. Hierdurch wird allerdings die Effizienz des Zerkleinerungsvorganges erheblich gemindert.

Das deutsche Gebrauchsmuster DE 93 16 683 U1 beschreibt einen Feldhäcksler, der neben einer Häckseleinrichtung ein Vorsatzgerät zum Aufnehmen und Zuführen von Erntegut aufweist. Hierfür sind zwei aufrecht und achsparallel stehende Einzugstrommeln vorgesehen, die in einem relativ geringen Abstand zum Erdboden einstellbare Kreismesser aufweisen. Die Einzugstrommeln sind an den den Kreismessern zugewandten Endbereichen mit mehreren vorstehenden Einzugsnasen ausgerüstet und am Umfang mit mehreren in Achsrichtung verlaufenden und sich über die gesamte Höhe erstreckenden Einzugsleisten besetzt.

Die Veröffentlichungsschrift der deutschen Patentanmeldung DE 10 2007 050 042 A1 schlägt einen Häcksler und eine Aufnahmevorrichtung für Schnittgut vor, wobei die Aufnahmeeinrichtung bzw. Aufnahmevorrichtung zwei senkrecht angeordnete, rotierende Aufnahmetrommeln umfasst. Die Aufnahmetrommeln weisen einen oberen Bereich und einen unteren Bereich auf, wobei der untere Bereich für einen schnelleren Umlauf als der obere Bereich vorgesehen ist. Hierdurch werden Steine oder andere Verunreinigungen während der Aufnahme des Schnittgutes weggeschleudert bzw. abgewiesen, sodass die Schnittgutzerkleinerung reibungslos verlaufen kann.

Die beschriebenen Aufnahmeeinrichtungen für Häcksler weisen jedoch alle verschiedene Nachteile auf, insbesondere kann es immer wieder zu Verstopfungen bei der Zufuhr des Schnittgutes kommen, sodass der Zerkleinerungsvorgang des Schnittgutes nicht optimal durchgeführt werden kann.

Der vorliegenden Erfindung liegt demgegenüber die Aufgabe zugrunde, einen Häcksler mit einer Aufnahmeeinrichtung bereitzustellen, die einen reibungslosen Einzug auch von sperrigem Schnittgut, insbesondere von Rebholz oder Baumschnitt, erlaubt, sodass eine optimale Zerkleinerung in einer nachgeschalteten Häckseleinrichtung möglich ist.

Diese Aufgabe wird gelöst durch eine Aufnahmeeinrichtung für einen Häcksler mit einer Häckseleinrichtung, wie sie sich aus dem unabhängigen Anspruch 1 ergibt. Bevorzugte Ausgestaltungen der erfindungsgemäßen Aufnahmeeinrichtung sind Gegenstand der abhängigen Ansprüche.

Der Häcksler ist mit einer Häckseleinrichtung und einer Aufnahmeeinrichtung ausgestattet, wobei die erfindungsgemäße Aufnahmeeinrichtung wenigstens zwei senkrecht angeordnete Einzugswalzen oder Einzugstrommeln umfasst. Die Einzugswalzen sind für einen gegensinnigen Umlauf vorgesehen und ziehen das Schnittgut derart ein, dass es zu einer hinter den Einzugswalzen zentral angeordneten Zuführöffnung für die eigentliche Häckseleinrichtung transportiert wird, wobei das Schnittgut nach dem Passieren der Zuführöffnung in die Häckseleinrichtung gelangt und dort zerkleinert wird.Erfindungsgemäß wird die Zufuhröffnung zu der Häckseleinrichtung von einem senkrechten Spalt gebildet. Statt zwei Einzugswalzen, die zu beiden Seiten der Zuführöffnung angeordnet sind, können auch weitere Einzugswalzen vorgesehen sein, die beispielsweise weiter vorne in Richtung der Zufuhr des Schnittgutes angeordnet sind, wobei im oberen Bereich des Einzugsbereiches wenigstens eine weitere Einzugseinrichtung vorgesehen ist. Hierbei kann es sich beispielsweise um wenigstens eine zentral angeordnete rotierende Einrichtung mit Mitnahmemitteln, beispielsweise ein Zackenrad oder ein Zinkenrad, und/oder wenigstens einen zentral angeordneten beweglichen Haken und/oder eine quer angeordnete Schneckenwalze oder um Kombinationen derartiger Bauteile im oberen und/oder unteren Bereich des Einzugsbereiches handeln. In Bezug auf die Position der Einzugswalzen kann diese weitere Einzugseinrichtung vorzugsweise weiter vorne in Richtung der Aufnahme des Schnittgutes angeordnet sein. Diese weitere Einzugseinrichtung wirkt von oben und/oder gegebenenfalls von unten auf das Schnittgut ein. Durch diese weitere Einzugseinrichtung wird erreicht, dass das Schnittgut in die richtige Orientierung für den Eintritt in die Zuführöffnung gebracht wird. Die weitere Einzugseinrichtung ist vorzugsweise zentral angeordnet bzw. ist zur Mitte des Einzugsbereichs hin orientiert. So kann quer liegendes Schnittgut, also beispielsweise querliegender Astschnitt, derart während der Aufnahme ausgerichtet und geleitet werden, dass es gut zu der Zuführöffnung überführt wird, ohne dass es zu einem Verstopfen oder Verhaken im Einzugsbereich kommt.

Unabhängig von der oben beschriebenen weiteren Einzugseinrichtung ist im unteren Bereich des Einzugsbereiches eine quer angeordnete rotierende Aufnahmewalze vorgesehen, die auf dem Untergrund liegendes Schnittgut abheben und der Aufnahmeeinrichtung zuführen kann. Hierfür sind vorzugsweise Mitnahmemittel auf der Aufnahmewalze vorgesehen, beispielsweise eine Mehrzahl von Zinken oder Haken, die umlaufend auf der Aufnahmewalze angeordnet sind. Insbesondere wenn die bereits beschriebene weitere Einzugseinrichtung im oberen Bereich der Aufnahmeeinrichtung angeordnet ist, ist die Rotationsrichtung der Aufnahmewalze vorzugsweise entgegengesetzt zur Rotationsrichtung bzw. zur Bewegungsrichtung der oberen weiteren Einzugseinrichtung, sodass das Schnittgut reibungslos zwischen der unteren quer angeordneten rotierenden Aufnahmewalze und der oberen weiteren Einzugseinrichtung in die Aufnahmeeinrichtung eingezogen werden kann. Die untere Aufnahmewalze und die obere weitere Einzugseinrichtung ergreifen und schieben das Schnittgut sowohl von unten als auch von oben, sodass der Gutsfluss aufrechterhalten wird und das Schnittgut zwischen die mittleren Einzugswalzen und in die Zuführöffnung hinter den mittleren Einzugswalzen gelenkt und geführt wird.

In einer bevorzugten Ausgestaltung der erfindungsgemäßen Aufnahmeeinrichtung ist eine der rotierenden Einzugswalzen feststehend und die andere Einzugswalze pendelnd aufgehängt. Durch die pendelnde Aufhängung der einen Einzugswalze wird erreicht, dass diese Einzugswalze bei Bedarf ausweichen kann, sodass es bei größerem und/oder sperrigem Schnittgut, beispielsweise größeren Ästen, nicht zu einem Verstopfen im Einzugsbereich zwischen den Einzugswalzen kommt. Durch das Ausweichen der pendelnd aufgehängten Einzugswalze wird der Bereich zwischen den Einzugswalzen zeitweilig vergrößert, sodass beispielsweise ein Blockieren der rotierenden Einzugswalzen verhindert wird.

Die pendelnde Aufhängung der einen Einzugswalze wirkt vorzugsweise entgegen einer Rückstellkraft, beispielsweise entgegen einer Federkraft, sodass die Zuführwalze wieder in ihre Ausgangsposition zurückschwingen kann, sobald das sperrige Schnittgut nicht mehr gegen diese Einzugswalze drückt. Hierfür kann beispielsweise eine Spiralfeder, ein Hydraulikzylinder, eine Gasdruckfeder oder ähnliches eingesetzt werden.

Um die Aufnahme des Schnittgutes weiter zu verbessern, ist vorzugsweise der feststehenden, senkrecht angeordneten Einzugswalze wenigstens eine ebenfalls senkrecht stehende feststehende Zuführwalze zugeordnet. Diese Zuführwalze ist vorzugsweise etwas weiter vorne im Hinblick auf die Aufnahme des Schnittgutes und seitlich der feststehenden Einzugswalze angeordnet. In entsprechender Weise kann auch der pendelnd aufgehängten Einzugswalze eine ebenfalls senkrecht stehende pendelnd aufgehängte Zuführwalze zugeordnet sein, die vorzugsweise an die pendelnd aufgehängte Einzugswalze gekoppelt ist. Für diese Zuführwalze und die pendelnd aufgehängte Einzugswalze ist vorzugsweise eine gemeinsame pendelnde Aufhängung vorgesehen. Durch diese Anordnung von Zuführwalzen im Zusammenspiel mit der weiteren Einzugseinrichtung wird das aufgenommene Schnittgut, dass gegebenenfalls ursprünglich quer liegt, sukzessive in eine längs verlaufende Ausrichtung gebracht, um besonders reibungslos in die Zuführöffnung zur Häckseleinrichtung eintreten zu können.

Es kann vorgesehen sein, dass die seitlichen Zuführwalzen, also die feststehende Zuführwalze und/oder die pendelnd aufgehängte Zuführwalze, einen kleineren Durchmesser als die weiter innen angeordneten Einzugswalzen aufweisen. Hierdurch wird bei gleichem Antrieb der Walzen eine geringere Umfangsgeschwindigkeit bei den äußeren Zuführwalzen erreicht, sodass das Schnittgut noch besser ausgerichtet und der zentral angeordneten Zuführöffnung zugeleitet werden kann.

Vorzugsweise sind auf dem äußeren Umfang der Einzugswalzen und/oder der Zuführwalzen Mitnahmemittel vorgesehen, insbesondere senkrecht angeordnete Reihen und/oder waagerechte Ringe mit einer Mehrzahl von Mitnahmemitteln, beispielsweise senkrechte Zackenreihen und/oder waagerechte Zackenringe. Beispielsweise können auf der pendelnd aufgehängten Einzugswalze und der daran gekoppelten Zuführwalze sowie auch auf der anderen, also der feststehenden Zuführwalze, eine Mehrzahl von senkrechten Zackenreihen vorgesehen sein, während auf der feststehenden Einzugswalze eine Mehrzahl von Zackenringen vorgesehen ist. Statt der erwähnten Zacken können auch andere Mitnahmemittel, beispielsweise Zinken oder Ähnliches, vorgesehen sein. An der rückwärtigen Wand der Aufnahmeeinrichtung können Abstreifer in Form von Aussparungen im Blech im Bereich der Zuführöffnung in Anpassung an die Mitnahmemittel der Walzen vorgesehen sein, beispielsweise in Form von länglichen quer verlaufenden Aussparungen für die Zackenringe der feststehenden Einzugswalze.

Es kann vorgesehen sein, dass die äußeren Zuführwalzen weniger Mitnahmemittel als die weiter innen angeordneten Einzugswalzen aufweisen. Beispielsweise können die Zuführwalzen weniger senkrechte Zackenreihen als die pendelnd aufgehängte Einzugswalze tragen.
Es ist bevorzugt, dass die Einzugswalzen und die gegebenenfalls vorgesehenen Zuführwalzen über ein zentrales, feststehendes Getriebe angetrieben werden. Hierdurch ist eine besonders vorteilhafte konstruktive Ausgestaltung der Vorrichtung möglich. Beispielsweise können alle senkrecht angeordneten Walzen über Gelenkwellen und Stirnräder, Kegelräder oder Vergleichbares von einem Hydraulikmotor angetrieben werden. Durch eine entsprechende Anordnung der Antriebsräder kann ein gegensinniger Antrieb der beiden Einzugswalzen und der jeweils den Einzugswalzen zugeordneten Zuführwalzen erreicht werden, sodass Schnittgut durch die entsprechenden Rotationsrichtungen in Richtung der Zuführöffnung, die insbesondere in der Mitte hinter den Einzugswalzen liegt, gelenkt wird. Der Vorteil von Hydraulikmotoren ist, dass die Geschwindigkeit des Antriebs zur Einstellung der Schnittlänge des Häckselgutes und zur Drehung der Walzen gesteuert und die Drehrichtung sogar umgedreht werden kann. Dies ist insbesondere dann vorteilhaft, wenn es im Einzugsbereich zu einer Verstopfung oder zu einem Blockieren der Walzen kommt. Durch das Umdrehen der Drehrichtung der Walzen kann eine solche Verstopfung wieder gelöst werden.
Für den gegensinnigen Antrieb der weiter vorne erläuterten oberen weiteren Einzugseinrichtung und der im unteren Bereich des Einzugsbereichs quer angeordneten rotierenden Aufnahmewalze können weitere Hydraulikmotoren vorgesehen sein. Durch die gegensinnige Rotation der weiteren Einzugseinrichtung und der Aufnahmewalze wird das Schnittgut zwischen der oberen weiteren Einzugseinrichtung und der unteren quer angeordneten Aufnahmewalze eingezogen. Durch geeignete Anbindung an die Antriebswellen der Aufnahmewalze und der weiteren Einzugseinrichtung kann der Antrieb gegebenenfalls mit nur einem Hydraulikmotor bewerkstelligt werden. Es können jedoch auch für die verschiedenen Walzen und Einzugseinrichtungen separate Antriebe vorgesehen sein.

Bei der eigentlichen Häckseleinrichtung des Häckslers handelt es sich vorzugsweise um eine an sich bekannte Scheibenradhäckseleinrichtung, die hinter der Zuführöffnung angeordnet ist. Das gehäckselte Schnittgut kann über einen Rüssel, also eine rohrförmige Einrichtung, von der Häckseleinrichtung zu einem Auffangbehälter geleitet werden. Mittels des Rüssels kann das Häckselgut beispielsweise über ein Fahrzeug (Schlepper) hinweg, an dem vorne der Häcksler angekoppelt ist, in einen hinter dem Fahrzeug angeordneten Auffangbehälter transportiert werden. Der Rüssel kann mehrgliedrig ausgestaltet sein und über ein mechanisches Gestänge geführt werden, sodass er beispielsweise insbesondere für den Transport einklappbar ist. Der Rüssel kann auch in der Breite schwenkbar ausgestaltet sein. So kann das Häckselgut über den Rüssel beispielsweise auch seitlich in die Umgebung oder in einen Auffangbehälter abgesetzt werden. Der Häcksler kann also für einen Frontanbau an einen Schlepper, aber auch beispielsweise für einen Heckanbau an den Schlepper oder als gezogene Maschine oder als Einbau in einen Anhänger vorgesehen sein. Darüber hinaus ist auch eine stationäre Betriebsweise möglich.

Weitere Merkmale und Vorteile der Erfindung ergeben sich aus der nachfolgenden Beschreibung von Ausführungsbeispielen in Verbindung mit den Zeichnungen und Unteransprüchen. Hierbei können die einzelnen Merkmale jeweils für sich oder in Kombination miteinander verwirklicht sein.
In den Zeichnungen zeigen:
- Figur 1: Übersichtsdarstellung einer Ausführungsform des Häckslers in Frontanbau an einem Schlepper;
- Figur 2: isometrische Ansicht einer bevorzugten Ausführungsform der erfindungsgemäßen Aufnahmeeinrichtung in einer Ansicht schräg von vorn ohne Schutzgehäuse;
- Figur 3: isometrische Ansicht einer weiteren Ausführungsform der erfindungsgemäßen Aufnahmeeinrichtung in einer Ansicht schräg von der Seite ohne Schutzgehäuse;
- Figur 4: isometrische Ansicht einer weiteren Ausführungsform der erfindungsgemäßen Aufnahmeeinrichtung in einer Ansicht schräg von vorn ohne Schutzgehäuse;
- Figur 5: isometrische Aufsicht auf den unteren Teil einer Ausführungsform der erfindungsgemäßen Aufnahmeeinrichtung und
- Figur 6: isometrische Ansicht einer erfindungsgemäßen Aufnahmeeinrichtung schräg von vorn ohne Schutzgehäuse und mit Getriebe.

### Ausführungsbeispiele

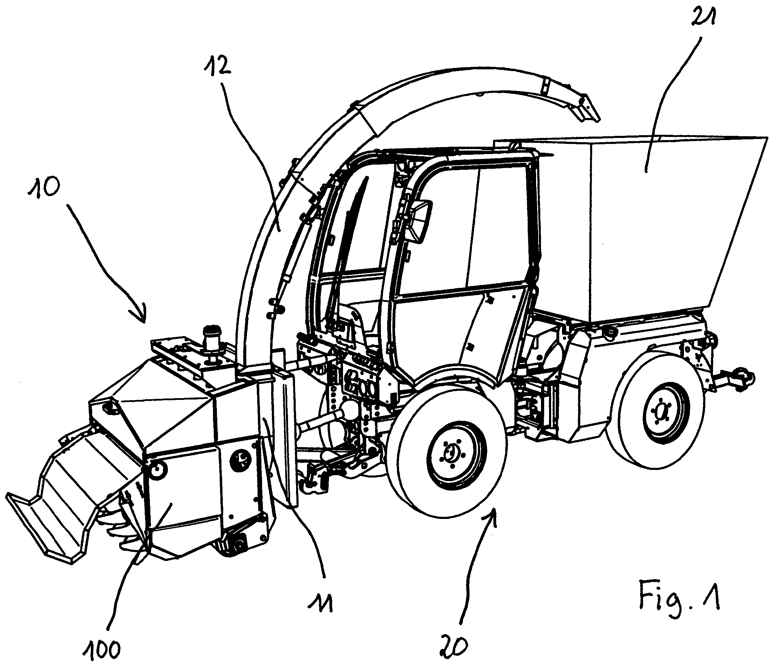

Figur 1 illustriert die Anordnung eines Häckslers 10 als Frontanbau an einem Schlepper 20. Der Schlepper 20 ist im hinteren Bereich mit einem Auffangbehälter 21 ausgestattet. Der Häcksler 10 umfasst neben einer erfindungsgemäßen Aufnahmeeinrichtung 100 eine Häckseleinrichtung 11. An die Häckseleinrichtung 11 schließt sich ein Rüssel 12 an, der das gehäckselte Schnittgut in den Auffangbehälter 21 überführt. Bei der Häckseleinrichtung 11 handelt es sich beispielsweise um eine an sich bekannte Scheibenradhäckseleinrichtung. Die Messer der Häckseleinrichtung können wie üblich fest auf einer umlaufenden Häckselwelle montiert sein. Die Messer können auch schwingend oder pendelnd beweglich sein, sodass ein Ausweichen bei Steinen oder anderen harten Fremdkörpern im Schnittgut möglich ist. Der Häcksler 10 kann beispielsweise für eine Arbeitsbreite von 1,20 m vorgehen sein. Diese Arbeitsbreite ist für einen Einsatz in einer Rebanlage sehr geeignet. Es sind jedoch auch andere Abmessungen und Anwendungszwecke möglich. Beispielsweise eignet sich der Häcksler auch für die Zerkleinerung von Schnittgut in Obstbaumanlagen. Allgemein lässt sich mit dem Häcksler vor allem Astschnitt sehr gut bearbeiten, beispielsweise Astschnitt oder Rebschnitt mit einem Durchmesser zwischen etwa 10 und etwa 140 mm. Die hier näher erläuterten Ausführungsformen des Häckslers sind sehr gut für einen Frontanbau an einen üblichen Schlepper geeignet. In vergleichbarer Weise kann der Häcksler auch hinter einem Fahrzeug als Heckanbau oder für einen stationären Betrieb vorgesehen sein. Der Häcksler in einer Ausführungsform, die für einen Heckanbau vorgesehen ist, kann auch als Einachsanhänger ausgestaltet sein. Das zerkleinerte Häckselgut kann bei einem Häcksler in Heckanbau dann beispielsweise auf einen hinter dem Häcksler angehängten Anhänger oder in einen Auffangbehälter, der sich im Heck des Schleppers, also in Fahrtrichtung vor dem Häcksler, befindet, geladen werden. Weiterhin kann der Häcksler so eingerichtet sein, dass er für eine seitliche Ablage des Schnittgutes in ein in der Nachbarspur nebenherfahrendes Fahrzeug vorgesehen ist.

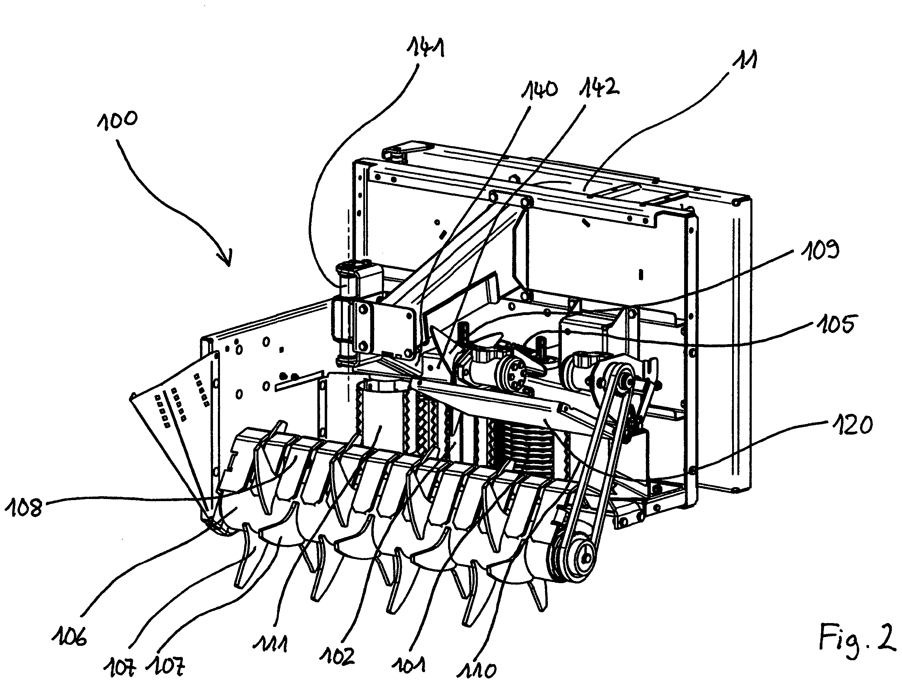

Aus Figur 2 gehen weitere Einzelheiten zu der erfindungsgemäßen Aufnahmeeinrichtung hervor. In dieser Darstellung ist im Wesentlichen die Aufnahmeeinrichtung 100 illustriert. Das Schutzgehäuse ist weitestgehend nicht dargestellt. Zwei Einzugswalzen 101 und 102 flankieren eine dahinter angeordnete Zuführöffnung, durch die das Schnittgut in die dahinter angeordnete Häckseleinrichtung 11 gelangt. Die Zuführwalzen 101 und 102 sind senkrecht angeordnet und rotieren gegensinnig, sodass das Schnittgut zwischen beiden Einzugswalzen 101 und 102 eingezogen und in die Zuführöffnung geleitet wird. In der hier dargestellten Ausführungsform wird das auf dem Untergrund liegende Schnittgut mittels einer rotierenden Aufnahmewalze 106 und der daran angeordneten Mitnahmemittel 107 in das Innere der Aufnahmeeinrichtung 100 gefördert. Die Aufnahmewalze 106 wird nach oben hin von einem Abdeckblech 108 mit Aussparungen für die Mitnahmemittel 107 abgedeckt. Das Abdeckblech 108 ist derartig geformt, dass das Schnittgut gewissermaßen in das Innere der Aufnahmeeinrichtung 100 fällt oder rutscht. Im oberen Bereich des Einzugsbereichs ist als weitere Einzugseinrichtung in dieser Ausführungsform ein Zackenrad 109 vorgesehen. Das Zackenrad 109 befindet sich in zentraler Position und rotiert gegensinnig zur Aufnahmewalze 106. Durch die umlaufenden Zacken des Zackenrades 109 wird das aufgesammelte Schnittgut auch von oben weiter in die Aufnahmeeinrichtung 100 gefördert. Gleichzeitig wird das Schnittgut, das gegebenenfalls querliegt, in die richtige Orientierung gebracht, sodass es in optimaler Weise zu der hinter den Einzugswalzen 101, 102 liegenden Zuführöffnung geleitet wird. Zu beiden Seiten des Zackenrades 109 ist jeweils ein oberes Einzugsblech 120 vorgesehen, das den Einzugsspalt nach oben begrenzt. Der Übersichtlichkeit halber ist in dieser Darstellung nur eines dieser Bleche 120 gezeigt. Die Zacken des Zackenrades 109 greifen durch einen Spalt zwischen den Blechen 120 in den Einzugsspalt ein.
Die Einzugswalze 102 ist pendelnd mittels einer Pendelaufhängung 140 aufgehängt. Die Pendelaufhängung 140 umfasst eine Pendelwelle 141, die fest am Gehäuse (nicht dargestellt) montiert ist. Ein Querarm 142 der Pendelaufhängung ist über eine Feder 105 an der rückwärtigen Wandung der Aufnahmeeinrichtung 100 aufgehängt. Durch die pendelnde Aufhängung der Einzugswalze 102 wird erreicht, dass diese Einzugswalze ausweichen kann, sobald sperriges und großes Schnittgut in den Einzugsbereich gelangt. Hierdurch wird ein Verstopfen der Aufnahmeeinrichtung vermieden. Sobald das sperrige Schnittgut nicht mehr gegen die Einzugswalze 102 drückt, wird die Einzugswalze 102 durch die Feder 105 zurück in ihre Ausgangsposition gezogen.

Der feststehenden Walze 101 ist seitlich eine Zuführwalze 110 zugeordnet, die ebenfalls senkrecht steht und im gleichen Sinn wie die Einzugswalze 101 umläuft. Auf der gegenüberliegenden Seite der Aufnahmeeinrichtung 100 ist eine weitere Zuführwalze 111 vorgesehen, die der pendelnd aufgehängten Einzugswalze 102 zugeordnet ist und ebenfalls pendelnd aufgehängt ist. Die Zuführwalze 111 ist an die Einzugswalze 102 gekoppelt und gemeinsam mit der Einzugswalze 102 an dem Querarm 142 der Pendeleinrichtung 140 gelagert. Die Zuführwalzen 110 und 111 befinden sich in Richtung der Aufnahme des Schnittgutes etwas weiter vorne als die zentralen Einzugswalzen 101 und 102. Weiterhin sind sie seitlich von den Einzugswalzen 101 und 102 angeordnet, sodass das Schnittgut zu der Zuführöffnung hinter den Einzugswalzen 101, 102 geleitet wird.

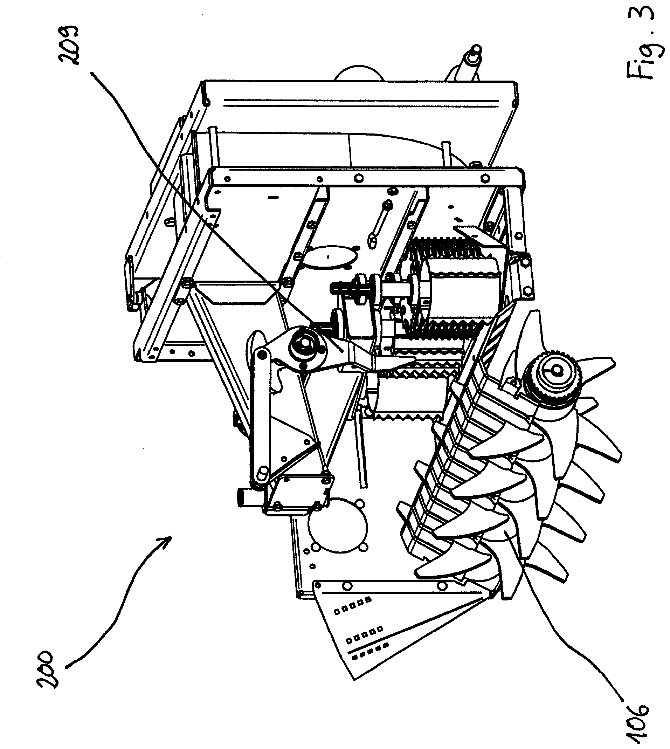

Figur 3 illustriert eine weitere Ausführungsform 200 der erfindungsgemäßen Aufnahmeeinrichtung. Diese Ausführungsform entspricht in weiten Teilen der Ausführungsform 100 aus Fig. 2. Die entsprechenden Elemente sind daher nicht weiter bezeichnet bzw. mit den gleichen Bezugszeichen bezeichnet wie in Fig. 2. Das Entsprechende gilt für die folgenden Figuren. Im Unterschied zur Ausführungsform 100 ist in der Ausgestaltung 200 als weitere Einzugseinrichtung statt des Zackenrades 109 ein als Viergelenk ausgebildeter, zentral angeordneter beweglicher Haken 209 vorgesehen, der durch raffende Bewegungen das Schnittgut weiter in das Innere der Aufnahmeeinrichtung 200 fördert. Die Bewegungen des Hakens 209 verlaufen auch in dieser Ausführungsform in gewisser Weise gegensinnig zur Bewegung der rotierenden Aufnahmewalze 106.

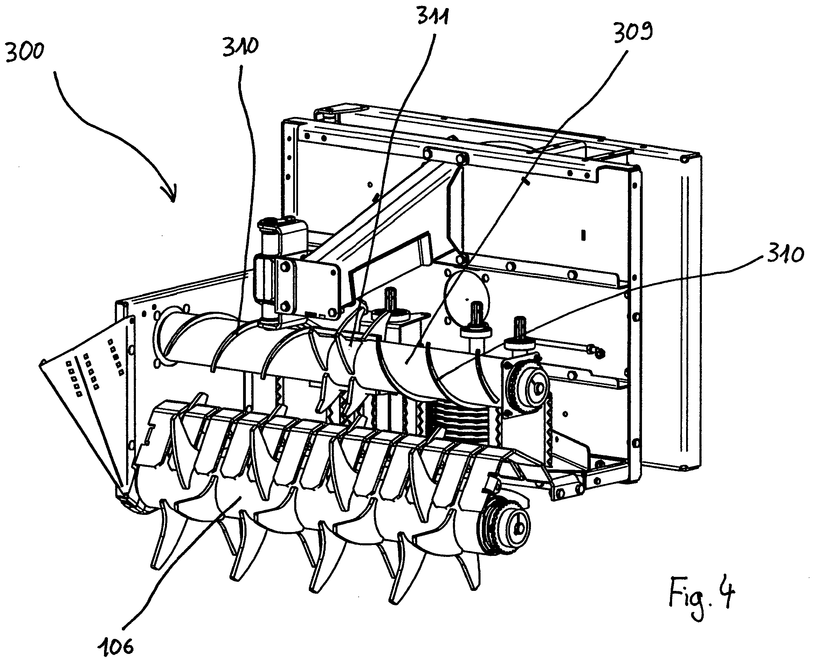

Figur 4 illustriert eine weitere Ausgestaltung 300 der erfindungsgemäßen Aufnahmeeinrichtung, bei der als obere weitere Einzugseinrichtung eine umlaufend rotierende Schneckenwalze 309 vorgesehen ist, die quer angeordnet ist und gegensinnig zur Aufnahmewalze 106 rotiert. Hierdurch wird von oben und von unten der Aufnahmespalt begrenzt. Durch spiralig und gegenläufig, d.h. zur Mitte zulaufend angeordnete Mitnahmemittel 310 auf der Schneckenwalze 309 wird das Schnittgut in den zentralen

Bereich geleitet und entsprechend ausgerichtet, sodass es problemlos in die Zuführöffnung hinter den Einzugswalzen eingeführt werden kann. Dies wird durch weitere Mitnahmemittel 311, die im zentralen Bereich der Schneckenwalze als ringförmig angeordnete Zacken ausgebildet sind, weiter unterstützt.

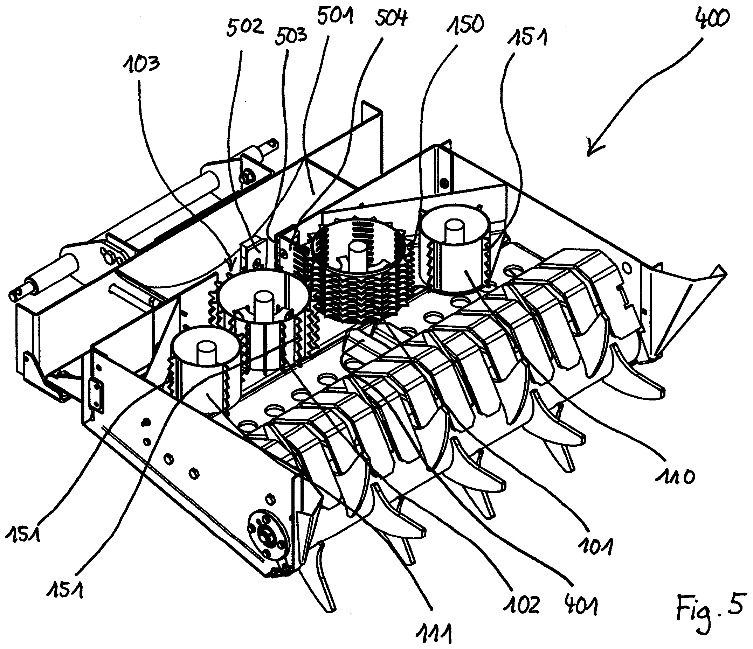

Figur 5 zeigt eine Aufsicht auf den unteren Teil einer erfindungsgemäßen Aufnahmeeinrichtung 400, aus der die Position der Einzugswalzen 101 und 102 sowie der diesen zugeordneten Zuführwalzen 110 und 111 deutlich wird. Die Einzugswalzen 101 und 102 flankieren die im hinteren Bereich der Aufnahmeeinrichtung 400 vorgesehene Zuführöffnung 103, durch die das Schnittgut in die rückwärtig der Aufnahmeeinrichtung 400 angeordnete Häckseleinrichtung geleitet wird. Die Zuführöffnung 103 wird durch einen senkrechten Spalt gebildet, der von den Einzugswalzen flankiert wird. Die Einzugswalzen 101 und 102 definieren dabei den senkrechten Einzugsspalt, der in die Häckseleinrichtung führt. Die im Umfang kleineren Zuführwalzen 110 und 111 sind jeweils seitlich der Einzugswalzen 101 und 102 etwas weiter vorne in Richtung der Schnittgutaufnahme angeordnet. Die Einzugswalze 102 und die Zuführwalze 111 sind aneinander gekoppelt und gemeinsam pendelnd aufgehängt. Die feststehende Zuführwalze 110 befindet sich in Richtung der Aufnahme des Schnittgutes etwas weiter vorne als die Einzugswalze 101. Auch die pendelnd aufgehängte Zuführwalze 111 befindet sich etwas weiter vorne als die pendelnd aufgehängte Einzugswalze 102, jedoch nicht so weit vorne wie die Zuführwalze 110, sodass genügend Bewegungsraum vorhanden ist, wenn die Einzugswalze 102 und die Zuführwalze 111 pendelnd ausweichen, wenn sperriges Schnittgut zwischen die Walzen gelangt.

Die Einzugswalzen 101 und 102 sowie die Zuführwalzen 110 und 111 sind jeweils mit einer Mehrzahl von Mitnahmemitteln 150, 151 ausgestattet. Die Einzugswalze 101 weist eine Mehrzahl von umlaufenden Zackenringen 150 auf. Die Einzugswalze 102 sowie die Zuführwalzen 110 und 111 tragen jeweils mehrere senkrecht verlaufende Zackenreihen 151, wobei die Einzugswalze 102 mehr Zackenreihen als die äußeren Zuführwalzen 110 und 111 trägt. Die inneren Einzugswalzen 101 und 102 weisen einen größeren Umfang als die seitlichen Zuführwalzen 110 und 111 auf. Hierdurch wird erreicht, dass bei gleichem Antrieb der verschiedenen Walzen 101, 102, 110, 111 der Umlauf der Oberflächen bei den äußeren Zuführwalzen 110 und 111 geringer ist als bei den inneren Einzugswalzen 101 und 102. Von der Häckseleinrichtung ist der untere Teil des Gehäuses als Schale 501 zu erkennen. Das rotierende Messer 502 der Häckseleinrichtung befindet sich im Bereich der Zuführöffnung 103, die beispielsweise circa 200 mm breit sein kann. Das rotierende Messer 502 ist fest oder schwingend auf einer umlaufenden Häckselwelle (nicht dargestellt) montiert. An einer Seite der Zuführöffnung 103 ist ein feststehendes Gegenmesser 503 befestigt. An dieser Seite der Zuführöffnung 103 ist ein Abstreifer 504 vorgesehen, sodass Schnittgut von den Mitnahmemitteln 150 der feststehenden Einzugswalze 101 abgestreift werden kann. Die Ausrichtung des Schnittguts in Richtung der Zuführöffnung wird in dieser Ausführungsform 400 weiterhin durch geeignete Vorsprünge 401 in Form von Leitschuhen auf dem Grund der Aufnahmeeinrichtung 400 verstärkt. Hierdurch kann der Einzug weiter verbessert werden, indem das Schnittgut nicht auf dem Grund der Aufnahmeeinrichtung 400 liegenbleibt und den Einzug verstopft.

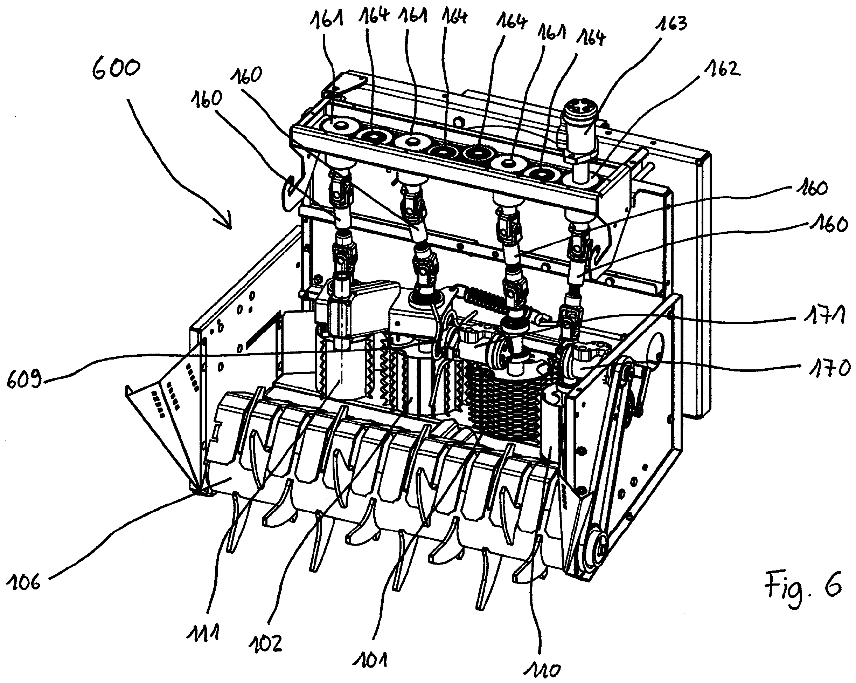

Figur 6 illustriert eine weitere Ausführungsform 600 der Aufnahmeeinrichtung, wobei als obere weitere Zuführeinrichtung ein Zinkenrad 609 vorgesehen ist. Das Zinkenrad 609 dreht sich gegenläufig zur unteren Aufnahmewalze 106, wodurch das Schnittgut eingezogen und in die richtige Orientierung gebracht wird. Die Zinken des Zinkenrades 609 können nachgiebig als Federn ausgestaltet sein, damit sie gegebenenfalls dicken Hölzern ausweichen können.

Fig. 6 illustriert weiterhin den Antrieb der erfindungsgemäßen Aufnahmeeinrichtung 600. Die Walzen 101, 102, 110, 111 sind über Gelenkwellen 160 mit Stirnrädern 161, 162 verbunden. Über einen Hydraulikmotor 163 wird das führende Stirnrad 162, das in dieser Ausführungsform der Zuführwalze 110 zugeordnet ist, angetrieben. Über zwischengeschaltete Stirnräder 164 wird die Rotation auf die anderen Stirnräder 161 übertragen. Durch geeignete Anordnung der Zwischenräder 164 wird erreicht, dass auf der einen Seite die Einzugswalze 101 und die Zuführwalze 110 und auf der anderen Seite die Einzugswalze 102 und die Zuführwalze 111 gegensinnig rotieren.

Zum Antrieb der querstehende Aufnahmewalze 106 und des Zinkenrades 609 sind weitere Hydraulikmotoren 170, 171 vorgesehen. Es ist auch möglich, dass die Aufnahmewalze und das obere weitere Einzugsmittel, in diesem Beispiel also das Zinkenrad 609 oder beispielsweise eine querverlaufende Schneckenwalze, gemeinsam über einen Hydraulikmotor angetrieben werden. Die Aufnahmewalze und das obere weitere Einzugsmittel werden vorzugsweise derart angetrieben, dass sich die Aufnahmewalze und das obere weitere Einzugsmittel im Gegensinn bewegen, sodass das Schnittgut zwischen der unteren Aufnahmewalze und dem oben angeordneten Einzugsmittel und den gegebenenfalls vorhandenen oberen Einzugsblechen in das Innere der Aufnahmeeinrichtung eingezogen wird.

## Patentansprüche

1. Aufnahmeeinrichtung (100; 200; 300; 400; 600) für einen Häcksler (10) mit einer Häckseleinrichtung (11), wobei die Aufnahmeeinrichtung (100; 200; 300; 400; 600) wenigstens zwei senkrecht angeordnete Einzugswalzen (101, 102) umfasst, die für einen gegensinnigen Umlauf vorgesehen sind, und die zum Transport von Schnittgut in eine hinter den Einzugswalzen angeordnete Zuführöffnung (103) für die Häckseleinrichtung (11) vorgesehen sind und wobei die Aufnahmeeinrichtung einen Einzugsbereich für das Schnittgut bildet, wobei im unteren Bereich des Einzugsbereichs eine quer angeordnete, rotierende Aufnahmewalze (106) angeordnet ist und im oberen Bereich des Einzugsbereiches wenigstens eine weitere Einzugseinrichtung (109; 209; 309; 609) vorgesehen ist, **dadurch gekennzeichnet, dass** die Zuführöffnung (103) für die Häckseleinrichtung von einem senkrechten Spalt gebildet ist.

2. Aufnahmeeinrichtung nach Anspruch 1, **dadurch gekennzeichnet, dass** die weitere Einzugseinrichtung wenigstens eine zentral angeordnete rotierende Einrichtung mit Mitnahmemitteln, insbesondere ein Zackenrad (109) oder ein Zinkenrad (609), und/oder wenigstens einen zentral angeordneten beweglichen Haken (209) und/oder eine quer angeordnete rotierende Schneckenwalze (309) umfasst.

3. Aufnahmeeinrichtung nach Anspruch 1 oder Anspruch 2, **dadurch gekennzeichnet, dass** die quer angeordnete, rotierende Aufnahmewalze (106) mit Mitnahmemitteln (107) ausgestattet ist.

4. Aufnahmeeinrichtung nach einem der vorhergehenden Ansprüche, **dadurch gekennzeichnet, dass** eine Einzugswalze (101) feststehend und eine andere Einzugswalze (102) pendelnd aufgehängt ist.

5. Aufnahmeeinrichtung nach Anspruch 4, **dadurch gekennzeichnet, dass** die pendelnde Aufhängung der einen Einzugswalze (102) entgegen einer Rückstellkraft wirkt.

6. Aufnahmeeinrichtung nach Anspruch 4 oder Anspruch 5, **dadurch gekennzeichnet, dass** der feststehenden Einzugswalze (101) wenigstens eine senkrecht angeordnete feststehende Zuführwalze (110) zugeordnet ist.

7. Aufnahmeeinrichtung nach einem der Ansprüche 4 bis 6, **dadurch gekennzeichnet, dass** der pendelnd aufgehängten Einzugswalze (102) eine senkrecht angeordnete pendelnd aufgehängte Zuführwalze (111) zugeordnet ist, wobei vorzugsweise eine gemeinsame pendelnde Aufhängung (140) der Einzugswalze (102) und der Zuführwalze (111) vorgesehen ist.

8. Aufnahmeeinrichtung nach Anspruch 6 oder Anspruch 7, **dadurch gekennzeichnet, dass** die feststehende Zuführwalze (110) nach Anspruch 6 und/oder die pendelnd aufgehängte Zuführwalze (111) nach Anspruch 7 einen kleineren Durchmesser als die feststehende Einzugswalze (101) und/oder die pendelnd aufgehängte Einzugswalze (102) aufweisen.

9. Aufnahmeeinrichtung nach einem der vorhergehenden Ansprüche, **dadurch gekennzeichnet, dass** auf dem äußeren Umfang der Einzugswalzen (101, 102) und/oder der Zuführwalzen (110, 111) nach Anspruch 6 oder Anspruch 7 Mitnahmemittel (150, 151) vorgesehen sind, wobei als Mitnahmemittel vorzugsweise waagerechte Ringe (150) und/oder senkrechte Reihen (151) mit einer Mehrzahl von Mitnahmemitteln, insbesondere waagerechte Zackenringe (150) oder senkrechte Zackenreihen (151), vorgesehen sind.

10. Aufnahmeeinrichtung nach Anspruch 6 und Anspruch 7, **dadurch gekennzeichnet, dass** die feststehende Einzugswalze (101) eine Mehrzahl von waagerechten Zackenringen (150) und die pendelnd aufgehängte Einzugswalze (102) und die Zuführwalzen (110, 111) eine Mehrzahl von senkrechten Zackenreihen (151) aufweisen, wobei vorzugsweise die Zuführwalzen (110, 111) weniger senkrechte Zackenreihen (151) als die pendelnd aufgehängte Einzugswalze (102) aufweisen.

11. Aufnahmeeinrichtung nach Anspruch 9 oder Anspruch 10, **dadurch gekennzeichnet, dass** im Bereich der Zuführöffnung (103) Abstreifer (504) für die Mitnahmemittel (150) vorgesehen sind.

12. Häcksler (10) mit einer Häckseleinrichtung (11), **dadurch gekennzeichnet, dass** der Häcksler eine Aufnahmeeinrichtung (100; 200; 300; 400; 600) gemäß einem der Ansprüche 1 bis 11 umfasst.

13. Häcksler nach Anspruch 12, **dadurch gekennzeichnet, dass** die Häckseleinrichtung (11) eine Scheibenradhäckseleinrichtung ist.

## Claims

1. A gathering device (100; 200; 300; 400; 600) for a shredder (10) with a shredding device (11), wherein the gathering device (100; 200; 300; 400; 600) comprises at least two vertically arranged lead-in rollers (101, 102) that are provided for mutually opposing revolution and that are provided for transporting cut material into a feed opening (103), arranged behind the lead-in rollers, for the shredding device (11), and wherein the gathering device forms a lead-in region for the cut material, wherein a transversely arranged rotating gathering roller (106) is arranged in the lower region of the lead-in region and at least one other lead-in device (109; 209; 309; 609) is provided in the upper region of the lead-in region, **characterized in that** the feed opening (103) for the shredding device is formed by a vertical gap.

2. The gathering device according to claim 1, **characterized in that** the other lead-in device comprises at least a centrally arranged rotating device with carrier means, in particular a toothed wheel (109) or a tine wheel (609), and/or comprises at least one centrally arranged movable hook (209) and/or a transversely arranged rotating spiral roller (309).

3. The gathering device according to claim 1 or claim 2, **characterized in that** the transversely arranged rotating gathering roller (106) is equipped with carrier means (107).

4. The gathering device according to any of the preceding claims, **characterized in that** one lead-in roller (101) is stationary and another lead-in roller (102) is suspended swinging.

5. The gathering device according to claim 4, **characterized in that** the swinging suspension of the one lead-in roller (102) acts against a restoring force.

6. The gathering device according to claim 4 or claim 5, **characterized in that** at least one vertically arranged stationary feed roller (110) is allocated to the stationary lead-in roller (101).

7. The gathering device according to any of claims 4 to 6, **characterized in that** a vertically arranged swinging suspended feed roller (111) is allocated to the swinging suspended lead-in roller (102), wherein a common swinging suspension (140) of the lead-in roller (102) and the feed roller (111) is preferably provided.

8. The gathering device according to claim 6 or claim 7, **characterized in that** the stationary feed roller (110) according to claim 6 and/or the swinging suspended feed roller (111) according to claim 7 has a smaller diameter than the stationary lead-in roller (101) and/or the swinging suspended lead-in roller (102).

9. The gathering device according to any of the preceding claims, **characterized in that** carrier means (150, 151) are provided on the outer circumference of the lead-in rollers (101, 102) and/or feed rollers (110, 111) according to claim 6 or claim 7, wherein preferably horizontal rings (150) and/or vertical rows (151) having a plurality of carrier means, in particular horizontal notched rings (150) or vertical notched rows (151), are provided as carrier means.

10. The gathering device according to claim 6 and claim 7, **characterized in that** the stationary lead-in roller (101) has a plurality of horizontal notched rings (150) and the swinging suspended lead-in roller (102) and the feed rollers (110, 111) have a plurality of vertical notched rows (151), wherein the feed rollers (110, 111) preferably have fewer vertical notched rows (151) than the swinging suspended lead-in roller (102).

11. The gathering device according to claim 9 or claim 10, **characterized in that** strippers (504) for the carrier means (150) are provided in the region of the feed opening (103).

12. A shredder (10) with a shredding device (11), **characterized in that** the shredder comprises a gathering device (100; 200; 300; 400; 600) according to any of claims 1 to 11.

13. The shredder according to claim 12, **characterized in that** the shredding device (11) is a wheel shredding device.

## Revendications

1. Dispositif de réception (100 ; 200 ; 300 ; 400 ; 600) pour un broyeur (10) avec un dispositif de broyage (11), où le dispositif de réception (100 ; 200 ; 300 ; 400 ; 600) comprend au moins deux rouleaux d'introduction (101,102) disposés verticalement, qui sont prévus pour une circulation en sens opposé et qui sont prévus pour le transport d'un matériau découpé dans un orifice d'introduction (103) disposé derrière les rouleaux d'introduction pour le dispositif de broyage (11), et où le dispositif de réception forme une zone d'introduction pour le matériau découpé, où un rouleau de réception (106) en rotation disposé perpendiculairement est agencé dans la zone inférieure de la zone d'introduction et au moins un autre dispositif d'introduction (109 ; 209 ; 309 ; 609) est prévu dans la zone supérieure de la zone d'introduction, **caractérisé en ce que** l'orifice d'introduction (103) pour le dispositif de broyage est formé par une fente verticale.

2. Dispositif de réception selon la revendication 1, **caractérisé en ce que** l'autre dispositif d'introduction comprend au moins un dispositif rotatif disposé au centre avec des moyens d'entraînement, notamment une roue dentée (109), ou une roue à griffes (609), et/ou au moins un crochet (209) mobile disposé au centre, et/ou une vis sans fin (309) en rotation disposée transversalement.

3. Dispositif de réception selon la revendication 1 ou la revendication 2, **caractérisé en ce que** le rouleau de réception (106) en rotation disposé transversalement est équipé de moyens d'entrainement (107).

4. Dispositif de réception selon l'une des revendications précédentes, **caractérisé en ce qu'**un rouleau d'introduction (101) est suspendu de manière fixe et un autre rouleau d'introduction (102) est suspendu oscillant librement.

5. Dispositif de réception selon la revendication 4, **caractérisé en ce que** la suspension oscillant librement de l'un des rouleaux d'introduction (102) agit contre une force de rappel.

6. Dispositif de réception selon la revendication 4 ou la revendication 5, **caractérisé en ce que** le rouleau d'introduction (101) fixe est associé à au moins un rouleau d'acheminement (110) fixe disposé verticalement.

7. Dispositif de réception selon l'une des revendications 4 à 6, **caractérisé en ce que** le rouleau d'introduction (102) suspendu oscillant librement est associé à un rouleau d'acheminement (111) suspendu oscillant librement disposé verticalement, où de préférence, un système de suspension (140) oscillant librement commun du rouleau d'introduction (102) et du rouleau d'acheminement (11) est prévu.

8. Dispositif de réception selon la revendication 6 ou la revendication 7, **caractérisé en ce que** le rouleau d'acheminement (110) fixe selon la revendication 6 et/ou le rouleau d'acheminement (111) suspendu oscillant librement selon la revendication 7 présentent un diamètre plus petit que le rouleau d'introduction (101) fixe et/ou le rouleau d'introduction (102) suspendu oscillant librement.

9. Dispositif de réception selon l'une des revendications précédentes, **caractérisé en ce que** des moyens d'entraînement (150, 151) sont prévus sur le pourtour extérieur des rouleaux d'introduction (101, 102) et/ou des rouleaux d'acheminement (110, 111) selon la revendication 6 ou la revendication 7, où, en tant que moyens d'entrainement, de préférence, des anneaux horizontaux (150) et/ou des rangées verticales (151) avec une multitude de moyens d'entraînement, notamment, des anneaux dentelés (150) horizontaux ou des rangées de dents (151) verticales sont prévus.

10. Dispositif de réception selon la revendication 6 et la revendication 7, **caractérisé en ce que** le rouleau d'introduction (101) fixe présente une multitude d'anneaux dentelés (150) horizontaux et le rouleau d'introduction (102) suspendu oscillant librement et les rouleaux d'acheminement (110, 111) présentent une multitude de rangées de dents (151) verticales, où, de préférence les rouleaux d'acheminement (110, 111) présentent moins de rangées de dents (151) verticales que le rouleau d'introduction (102) suspendu oscillant librement.

11. Dispositif de réception selon la revendication 9 ou la revendication 10, **caractérisé en ce que**, dans la région de l'orifice d'introduction (103), des racloirs (504) sont prévus pour les moyens d'entraînement (150).

12. Broyeur (10) avec un dispositif de broyage (11), **caractérisé en ce que** le broyeur comprend un dispositif de réception (100 ; 200 ; 300 ; 400 ; 600) selon l'une des revendications 1 à 11.

13. Broyeur selon la revendication 12, **caractérisé en ce que** le dispositif de broyage (11) est un dispositif de broyage sous forme de roue à disque.
